# EUROPÄISCHE PATENTANMELDUNG

(11) **EP 1 249 579 A1**
(43) Veröffentlichungstag der Anmeldung: **16.10.2002**
(21) Anmeldenummer: 01109035.4
(22) Anmeldetag: 11.04.2001
(51) Int. Cl.: F01D 25/28, F01D 25/16

(54) **Turbinenanlage, inbesondere Dampfturbinenanlage**

(71) Anmelder: SIEMENS AKTIENGESELLSCHAFT, 80333 München (DE)
(72) Erfinder: Haje, Detlef, Dr., 46236 Bottrop (DE)

(57) **Zusammenfassung**

Die Erfindung betrifft eine Turbinenanlage (1), insbesondere eine Dampfturbinenanlage. Die Turbinenanlage (1) weist mindestens zwei Teilturbinen auf (2,3a,3b,3c), wobei jede der Teilturbinen (2, 3a, 3b, 3c) einen sich entlang der Hauptachse erstrechenden Turbinenläufer (5) aufweist. Die Turbinenläufer (5) sind starr miteinander verbunden zu einem Wellenstrang. Zumindest eine der Teilturbinen (2,3a,3b,3c) weist ein den Turbinenläufer (5) konzentrisch umschließendes Innengehäuse (8a,8b,8c) auf, wobei das Innengehäuse (8a, 8b, 8c) in einem Lagerbereich (10) axialverschieblich gelagert ist. Für eine axiale Verschiebung ist ein Axialkraft übertragendes Schubelement (9,9a) vorgesehen, das mit dem Innengehäuse (8a,8b,8c) verbunden ist. Zur Erzielung einer besonders leichten axialen Verschieblichkeit des Innengehäuses (8a,8b,8c) weist der Lagerbereich (10) eine Lagereinrichtung (11) mit einer so geringen Haftreibung und/oder Gleitreibung auf, dass ein bei einem Verschieben des Innengehäuses (8a,8b,8c) bei der Überwindung der Haftreibung spontan auftretender axialer Versatz kleiner ist als 2 mm.

## Beschreibung

Die Erfindung betrifft eine Turbinenanlage, insbesondere Dampfturbinenanlage, mit mindestens zwei Teilturbinen. Jede der Teilturbinen weist einen sich entlang einer Hauptachse erstreckenden Wellenstrang aus mehreren Turbinenläufern auf, welche Turbinenläufer starr miteinander verbunden sind. Zumindest eine der Teilturbinen weist ein den Turbinenläufer im Wesentlichen konzentrisch umschließendes Innengehäuse auf, wobei das Innengehäuse in einem Lagerbereich axialverschieblich gelagert ist. Für eine axiale Verschiebung des Innengehäuses ist ein Axialkraft übertragendes Schubelement vorgesehen, das mit dem Innengehäuse verbunden ist.

In der DE 35 22 916 A1 ist ein Turbosatz mit wenigstens einer ein Außengehäuse und ein dazu koaxiales Innengehäuse aufweisenden Niederdruck-Teilturbine und mit wenigstens einer koaxial und stromauf zur Niederdruck-Teilturbine angeordneten Hochdruck- und/oder Mitteldruck-Teilturbine beschrieben. Die Wellen der Teilturbinen sind starr miteinander zu einem Wellenstrang gekuppelt. Stromauf der Niederdruck-Teilturbine ist ein Axiallager für den Wellenstrang vorgelagert, welches eine Referenzebene definiert, von der die axiale Wellendehnung und -verschiebung ihren Ausgang nimmt. Das Innengehäuse ist mittels schubübertragender Kupplungsstangen an das axialbeweglich gelagerte Ende eines axial benachbarten Teilturbinen-Gehäuses oder an ein Turbinenlagergehäuse angeschlossen. Die Kupplungsstangen sind durch eine Wand des Außengehäuses mittels auch eine begrenzte Querbewegung ermöglichenden Dichtungselementen wärmebeweglich und vakuumdicht hinausgeführt. Ein der Niederdruck-Teilturbine vorgelagertes Turbinenlager definiert eine zweite Referenzebene, von welcher die axiale Dehnung und Verschiebung des auf diesem Turbinenlager aufgelagerten Teilturbinen-Gehäuses und des daran angekoppelten Teilturbinen-Gehäuses ihren Ausgang nehmen. Hierdurch erfolgt eine axiale Verschiebung des Wellenstrangs und der Teilturbinengehäuse auf praktisch gleicher axialer Dehnung und in gleiche Richtung. Dies ermöglicht zwischen einander benachbarten Lauf- und Leitschaufelkränzen minimale Axialspiele. Die Schubübertragung mittels der Kupplungsstangen ist in den Bereich schubübertragender Turbinenlager gelegt. Zudem ist eine vakuumdichte Durchführung der Kupplungsstangen baulich vereinigt mit einer horizontal wärmebeweglichen Pratzenlagerung des Innengehäuses der Niederdruck-Teilturbine. Die Pratzenarme des Innengehäuses erstrecken sich in wellenachsparalleler Richtung und liegen mit gleitfähigen Trag- und Führungsflächen an den Auflagern des zugehörigen Lagergehäuses auf. Die gleitfähigen Trag- und Führungsflächen sind hierbei durch Gleit- und Justierbeilagen im Passsitz realisiert. Die Kupplungsstangen sind in dem Bereich der Turbinenlager mit den Pratzenarmen kraftschlüssig gekuppelt, insbesondere ist eine Membrandichtung für vakuumdichte Durchführung mit einem äußeren Ringflansch an einer Stirnfläche des Außengehäuses der Niederdruck-Teilturbine und mit einem inneren Ringflansch an einer Turbinenlagergehäuse-Partie vakuumdicht angeschlossen. Die Anordnung der Dichtungselemente zwischen Sitzflächen an der Außengehäuse-Stirnwand und am Lagergehäuse, also zwischen Teilen nur geringer Relativverschiebung, bedingt, dass die größeren Wärmeverschiebungen der Innengehäuse von den Dichtungselementen entkoppelt sind.

In der DE-AS-1 216 322 ist eine Dampf- oder Gasturbine beschrieben mit mehreren, koaxial hintereinander angeordneten Teilturbinen, deren Wellen miteinander starr verkuppelt und von deren Gehäusen mindestens eines axial verschiebbar und mit einem ortsfesten Teilturbinengehäuse oder Lagerbock gekuppelt ist. Die Niederdruckgehäuse der Turbine bestehen jeweils aus einem Außen- und einem Innengehäuse. Es erfolgt eine Kupplung des Innengehäuses der Niederdruckturbine mit einem benachbarten Teilturbinengehäuse bzw. einem Lagerbock durch ein Gestänge, das durch die Wand des Außengehäuses dampfdicht und wärmebeweglich hindurchgeführt ist. Das Gestänge kann eine einzige Stange sein, die in der Außengehäusewand durch einen axial und radial nachgiebigen Faltenbalg abgedichtet ist. Das Gestänge kann weiterhin aus drei axial aneinandergereihten, gelenkig miteinander verbundenen Stangen bestehen, deren mittlere in einer Büchse der Außengehäusewand mit Gleitpassung axial beweglich ist. Durch ein solches Gestänge soll eine Axialverschiebung der Gehäuse erfolgen, durch die das Axialspiel zwischen dem Läufer und den Gehäusen möglichst konstant gehalten ist. Um die Größe des Axialspiels zu ändern, ist eine Änderung der Länge des Gestänges durch eine Änderung seiner Temperatur möglich. Diese Änderung der Temperatur wird durch eine zusätzliche Wärmebelastung des Gehänges mittels Dampf oder einer Flüssigkeit durchgeführt.

Eine solche Änderung der Größe des Axialspiels, bei der durch ein Rohr heißer Dampf geführt wird, ist in der GB-PS-1,145,612 beschrieben. Ein axial ausdehnbares Rohr ist an jeder seiner Stirnseiten mit einer Stange verbunden, die jeweils wiederum an dem Innengehäuse einer Niederdruck-Teilturbine befestigt ist. Eine axiale Verschiebung der Innengehäuse gegenüber einem Turbinenläufer setzt sich aus der jeweiligen Dehnung der Innengehäuse, der Dehnung der Kupplungsstangen sowie der Dehnung der Dehnungsrohre zusammen. Die thermische Dehnung der untereinander gekuppelten Innengehäuse wird ausgehend von einem Fixpunkt, der an dem Außengehäuse der am weitesten stromauf liegenden Niederdruck-Teilturbine angeordnet ist, definiert. Dieser Ausgangspunkt der thermischen Dehnungen der Innengehäuse unterscheidet sich von dem Ausgangspunkt der thermischen Dehnungen des Läufers, welcher in einem weiter stromauf liegenden Lager definiert ist. Die Dehnungsrohre sind über jeweilige Kompensatoren mit den entsprechenden Außengehäusen der Niederdruck-Teilturbinen verbunden, so dass die absolute Dehnung des Systems aus Innengehäusen und Kupplungsstangen von den Kompensatoren aufgenommen werden muss. Um eine weitgehende Konstanz zwischen der Dehnung des Turbinenläufers und dem System aus Innengehäusen und Kupplungsstange zu gewährleisten, ist in einer vorgegebenen Weise Dampf den Dehnungsrohren zuzuführen. Dieser Dampf muss entweder dem Dampfprozess entnommen oder separat zur Verfügung gestellt werden. Auch bedarf es eines Regelungsund eines Überwachungssystems, durch das je nach Betriebszustand der Dampfturbinen den Dehnungsrohren der zum Ausgleich des Axialspiels erforderliche Dampf zugeführt wird.

Aus der DE 196 29 933 C1 geht eine Turbinenanlage mit einem Schubelement sowie ein Schubelement hervor. Die Turbinenanlage weist zumindest zwei Teilturbinen auf, deren jede einen sich entlang einer Hauptachse erstreckenden Turbinenläufer sowie ein die Leitschaufeln aufnehmendes Innengehäuse aufweisen. Ein Innengehäuse ist in axialer Richtung verschieblich, wobei für eine axiale Verschiebung ein sich thermisch ausdehnendes Schubelement vorgesehen ist. Dieses weist eine erste Dehnkomponente und eine zweite Dehnkomponente auf, die über eine Koppelkomponente miteinander verbunden sind. Diese Koppelkomponente bewirkt mechanisch und/oder hydraulisch eine axiale Verschiebung der zweiten Dehnkomponente, welche größer ist als eine thermische Dehnung und/oder axiale Verschiebung der ersten Dehnkomponente.

Aufgabe der Erfindung ist es, eine Turbinenanlage anzugeben, bei der ein Axialspiel zwischen Läufer und Innengehäuse, insbesondere infolge axialer Wärmedehnungen zwischen Teilturbinen der Turbinenanlage, unter einem vorgebbaren Wert bleibt. Dabei sollen insbesondere im Hinblick auf die Anwendung bei einer mehrgehäusigen großen Turbinenanlage mit sehr schweren Gehäusen der Einsatz eines eine Axialkraft übertragenden Schubelements zur Axialspielreduzierung weiterhin möglich sein.

Diese Aufgabe wird erfindungsgemäß gelöst durch eine Turbinenanlage, insbesondere Dampfturbinenanlage, mit mindestens zwei Teilturbinen, wobei jede der Teilturbinen einen sich entlang einer Hauptachse erstreckenden Turbinenläufer aufweist, welche Turbinenläufer starr miteinander verbunden sind, wobei zumindest eine der Teilturbinen ein den Turbinenläufer umschließendes Innengehäuse aufweist, wobei das Innengehäuse in einem Lagerbereich axial verschieblich gelagert ist, und wobei für eine axiale Verschiebung ein Axialkraft übertragendes Schubelement vorgesehen ist, das mit dem Innengehäuse verbunden ist, wobei der Lagerbereich eine Lagereinrichtung mit einer so geringen Haftreibung aufweist, dass ein bei einem Verschieben des Innengehäuses bei der Überwindung der Haftreibung und Gleitreibung spontan auftretender axialer Versatz kleiner ist als 2 mm.

Vorzugsweise ist eine Lagereinrichtung mit einer so geringen Haftreibung vorgesehen, dass ein bei einem Verschieben des Innengehäuses bei der Überwindung der Haftreibung spontan auftretender axialer Versatz kleiner ist als 1,5 mm, insbesondere kleiner als 1 mm.

Die Erfindung geht von der Erkenntnis aus, dass die bisher aus dem Stand der Technik bekannten Maßnahmen zur Einstellung eines Axialspiels mittels Schubstangen, insbesondere bei vielgehäusigen massiven Turbinenanlagen aufgrund der großen zu übertragenden Axialkräfte bei einer axialen Verschiebung eines Innengehäuses nur begrenzt einsetzbar sind. Bei den bekannten Anlagen werden zur Übertragung von axialen Wärmedehnungen zwischen Teilturbinen eines Wellenstrangs zur Reduzierung der Relativdehnungen zwischen Turbinenläufer und Innengehäuse von Teilturbinen Einrichtungen verwendet, die die Gehäusedehnungen der axial vorgeordneten Teilturbine auf die Nachgeordneten übertragen (Schubstangen). Die von einem axialen Fixpunkt (Axiallager) eines Wellenstrangs ausgehende thermische Axialdehnung bedeutet bei großen Turbinenanlagen jedoch axiale Verschiebungen in der Größenordnung von 40 bis 50 mm. Um diese Axialdehnung nicht im vollen Umfang in den Axialspielen berücksichtigen zu müssen, werden die Gehäuse der Teilturbine, insbesondere die Niederdruck-Innengehäuse, mit Hilfe von Schubstangen mit einem Außengehäuse, insbesondere mit dem Mitteldruck-Außengehäuse einer Mitteldruck-Teilturbine, verbunden. Hierdurch wird ein erstes Innengehäuse um die Axialdehnung des vorgeordneten Außengehäuses, beispielsweise eines Mitteldruck-Teilturbinen-Außengehäuses, verschoben, ein zweites Innengehäuse einer weiteren Teilturbine um diejenige des Außengehäuses und des ersten Innengehäuses usw.. Dadurch wird eine Verminderung der Relativverschiebung zwischen dem Turbinenläufer und der Innengehäuse erreicht. Bisher wurden die Innengehäuse auf massiven Gleitplatten mit möglichst geringem Reibwert axial verschieblich gelagert. Unter Berücksichtigung der hohen Zuverlässigkeitsanforderungen und der langen Betriebsdauern von Kraftwerksturbinen ist es aus Betriebssicherheitsgründen allerdings geboten, höhere als die ursprünglichen Ausgangsreibwerte der Gleitplatten hierfür anzusetzen. Für die Bemessung der Axialkraft übertragenden Schubelemente beispielsweise Schubstangen und deren Aufnahmen, ergeben sich damit hohe Auslegungskräfte, beispielsweise Haftreibung an der Innengehäuse-Auflage bei verschlechtertem Reibwert zwischen Gleitplatte und Kontaktfläche. Diese bedingen eine massive Gestaltung der Schubstangen und der an der Kraftleitung beteiligten Bauteile, wie beispielsweise Aufnahmen und Lagergehäuse, sowie eine möglichst direkte Kraftleitung.

Die Erfindung geht nun bereits von der Überlegung aus, dass die anzusetzenden Reibkräfte bei einer vielgehäusigen massiven Turbinenanlage so groß werden, dass die Grenze der Realisierbarkeit und zuverlässigen Einsetzbarkeit von Axialkraft übertragenden Schubelementen, beispielsweise in Form von Schubstangen, erreicht wird. Nachteiligerweise ergibt sich unter Ansatz der erforderlichen hohen Auslegungskräfte nämlich eine erhebliche Verformung der Schubelemente, die vor der Überwindung der Haftreibung bei einem axialen Verschieben des Innengehäuses auftritt. Diese Verformung kann je nach Betriebszustand als eine axiale Pressung oder Dehnung des Schubelements, also in beiden Richtungen des sich entlang der Hauptachse erstreckenden Turbinenläufers, auftreten. Beispielsweise wird bei der Verwendung einer Schubstange als Axialkraft übertragendes Schubelement diese elastisch gestaucht oder gedehnt. Diese Verformungen Längung oder Stauchung müssen bei der axialen Spielauslegung berücksichtigt werden und führen zu einer Vergrößerung des axialen Spielbedarfes. Dieser wiederum erfordert einen größeren Abstand zwischen Lauf- und Leitschaufeln einer Teilturbine, was sogar dazu führen kann, dass möglicherweise bei der am axialen Ende eines Wellenstrangs angeordneten Teilturbine eine Stufe entfallen muss, womit ein erheblicher Wirkungsgradnachteil einhergeht. Darüber hinaus wird bei freistehenden Schaufeln mit Expansionsschräge durch den axialen Spielbedarf ein zusätzliches Radialspiel erforderlich, welches ebenfalls durch Spaltverluste einen nennenswerten Wirkungsgradverlust nach sich zieht.

Mit der Erfindung werden nun erstmals die gravierenden Nachteile der bisher bekannten Lösungen überwunden. Vorteilhafterweise ist damit die Realisierung einer Turbinenanlage mit einem Axialkraft übertragenden Schubelement für eine axiale Verschiebung auch bei einer vielgehäusigen massiven Turbinenanlage mit sehr schweren Gehäusen erreicht. Mit dem Konzept der Erfindung wird die Lagereinrichtung in dem Lagerbereich gezielt derart ausgestaltet, dass eine möglichst geringe Haftreibung erzielt wird. Haftreibungsarm bedeutet gleichzeitig auch Gleitreibungsarm, da typischerweise Gleitreimung kleiner als Haftreibung ist. Ein bei einem Verschieben spontan auftretender axialer Versatz wird somit auf einen vorgegebenen Wert begrenzt. Somit wird ein spontanes Losbrechen infolge Entspannung eines verformten Schubelements weitgehend verhindert, da durch den weitgehenden Wegfall oder die deutliche Begrenzung der Verformungsenergie des Schubelements die aufzubringenden axialen Verschiebungskräfte gegenüber den herkömmlichen Lösungen deutlich reduziert sind. Durch das neue Lagerkonzept der Erfindung ist auch eine Dehnungsübertragung (thermische und/oder mechanische Vorspannung) berücksichtigt, wodurch vorteilhafterweise eine Verringerung des vorzusehenden Axialspiels der Turbinenanlage erreicht ist.

Vorteilhafterweise ist durch die vorgeschlagene Lösung eine leichtere axiale Verschiebbarkeit des Innengehäuses durch relativ einfache konstruktive Maßnahmen gewährleistet. Damit kann die Auslegung der Axialkraft übertragenden Schubelemente, z.B. Schubstangen, und ihrer Ankopplung an das Innengehäuse weniger massiv gestaltet werden. Hierdurch ergeben sich Kosteneinsparungen im Hinblick auf den Materialeinsatz und die Materialauswahl für die Axialkraft übertragenden Schubelemente. Neben diesen konstruktiven Vorteilen sind gleichzeitig Axialspiel beeinflussende Verformungen des Schubelements deutlich reduziert und können im günstigsten Fall, bei entsprechend geringer Haftreibung des Lagers, sogar gänzlich entfallen.

Mit diesen Axialspiel reduzierenden Maßnahmen ist auch eine Erhöhung des Wirkungsgrads der Turbinenanlage verbunden, wobei eine große Turbinenanlage mit einer Mehrzahl von Teilturbinen umfasst ist.

In einer besonders bevorzugten Ausgestaltung ist die Lagereinrichtung haftreibungsfrei ausgestaltet. Gegenüber dem herkömmlichen Konzept mit einer reibungsbehafteten, insbesondere haftreibungsbehafteten, Gleitplatte im Passsitz ist die Ausgestaltung der Lagereinrichtung als haftreibungsfreie Lagereinrichtung deutlich überlegen. Ein spontanes Losbrechen bei einer axialen Verschiebung ist somit weitestgehend ausgeschlossen. Haftreibungsfrei bedeutet in diesem Zusammenhang weitgehend ohne Haftreibung, d. h. die Lagereinrichtung weist keine oder aber eine nur sehr geringe Haftreibung auf. Somit kann vorteilhafterweise sichergestellt werden, dass kein spontan auftretender axialer Versatz bei einem Verschieben des Innengehäuses zu verzeichnen ist, da keine oder nur sehr geringe Haftreibung zu überwinden ist. Insbesondere kann gewährleistet werden, dass ein möglicherweise doch auftretender axialer Versatz mit Sicherheit kleiner ist als 2 mm.

Vorzugsweise weist die Lagereinrichtung ein hydrostatisches Lager auf, welches mit einem druckbeaufschlagten Betriebsmittel, insbesondere Drucköl, versorgt ist, wobei ein Gleitfilm gebildet ist. Ein hydrostatisches Lager zeichnet sich in besonderer Weise durch eine sehr geringe Haftreibung aus. Das hydrostatische Lager weist vorteilhafterweise gar keine technisch relevante Haftreibung auf, wodurch axiale Pressungen oder Dehnungen des Schubelements praktisch nicht in Erscheinung treten. Durch den Gleitfilm ist das Innengehäuse auf dem Film gelagert, und kann bei einem Verschiebevorgang ohne spontan auftretenden axialen Versatz unter vernachlässigbaren oder zumindest unter sehr geringem Kraftaufwand über den Gleitfilm axial verschoben werden.

Vorzugsweise ist der Gleitfilm in einem Spalt vorgesehen, wobei die Höhe des Spalts in Abhängigkeit von dem Druck und/oder dem Volumenstrom des Betriebsmittels einstellbar ist. Durch die Einstellung z.B. des Drucks des Betriebsmittels, mit dem das hydrostatische Lager beaufschlagt ist, kann der Durchfluss des Betriebsmittels und damit die Höhe des Spalts in besonders einfacher und zuverlässiger Weise eingestellt werden. Je nach Masse des zu verschiebenden Innengehäuses kann der Druck des Betriebsmittels und damit die Spalthöhe an die Lagererfordernisse entsprechend angepasst werden. Die hydrostatische Lagerung, z.B. Beispiel mit einem Druckölfilm als Betriebsmittel, stellt dabei eine besonders vorteilhafte Form der Gleitlagerung dar und ist in besonderer Weise für den hier relevanten Anwendungsfall einer Turbinenanlage geeignet, da die für eine im Prinzip ebenso mögliche hydrodynamische Lagerung erforderlichen hohen Gleitgeschwindigkeiten fehlen. Es ist lediglich sicherzustellen, dass der Gleitfilm bei der Gleitlagerung durch fortwährende Betriebsmittelzufuhr aufrechterhalten wird.

Vorteilhafterweise kann durch entsprechend Ausgestaltung des hydrostatischen Lagers ein Ausfall der Zufuhr von Betriebsmittel, z.B. ein Schmiermittel, über längere Zeitdauer sicher ausgeschlossen werden. Ein Ausfall der Betriebsmittelzufuhr könnte bei instationären Bauteiltemperaturen im Laufe der Zeit wegen nach und nach zunehmenden Spannungsaufbaus in dem Schubelement und damit verbundener, nicht auslegungsgemäßer Verformung des Schubelements, zum axialen Anstreifen des Turbinenläufers an das Innengehäuse und damit zu gravierenden Schäden führen. In vorteilhafter Ausgestaltung lässt sich diese Anforderung recht gut erfüllen, wenn man hierfür die im Allgemeinen ohnehin vorhandene Betriebsmittelversorgung für die Lager des Wellenstranges der Turbinenanlage heranzieht, die hohen Zuverlässigkeitsanforderungen genügen muss. Bereits nach kurzer Zeit könnte nämlich eine Unterbrechung der Betriebsmittelzufuhr für die Lager des Wellenstrangs zu schweren Schäden an der Dampfturbine infolge radialen Anstreifens führen.

In einer bevorzugten Ausgestaltung der Turbinenanlage sollte daher die vorgeschlagene hydrostatische Gleitlagerung durch die vorhandene Betriebs- oder Schmiermittelversorgung der Lager des Wellenstranges erfolgen. Hierdurch ist sowohl eine leichte axiale Verschiebbarkeit des Innengehäuses als auch eine hinreichende Betriebssicherheit der Turbinenanlage gewährleistet.

In einer alternativen Ausgestaltung, beispielsweise bei stark unterschiedlichen Druckanforderungen der Lager, ist für die Versorgung des hydrostatischen Lagers eine eigene Betriebsmittelversorgung nach ähnlich hohen Zuverlässigkeitskriterien, wie bei der oben diskutierten Wellenlagerung, vorzusehen. Bei einem derartigen separaten Versorgungssystem sind dann eventuell auftretende kurzzeitige Ausfälle des Betriebsmittels ggf. tolerierbar, sofern ein damit verbundenes Absinken des Gehäuses um die Höhe des Gleitfilms innerhalb der für die Turbinenanlage vorgesehenen Radialspiele liegt. Für die Ausführung der Gleitlagerung mit dem hydrostatischen Lager können dabei in einfacher und an sich bekannter Weise die Gestaltungsprinzipien aus der Lagerungstechnik zugrundegelegt werden. Die Gestaltung der Gleitschuhe, die Versorgung mit Betriebsmittel, die Regelung des Volumenstroms sowie das Vermeiden von Kantentragen usw. kann unter Anwendung dieser Prinzipien erreicht werden.

In einer besonders bevorzugten Ausgestaltung weist die Lagereinrichtung ein Wälzlager mit einer Anzahl von entlang der axialen Verschieberichtung beabstandet zueinander angeordneten Wälzkörpern auf.

Bei einer Wälzlagerung kommen verschiedene Möglichkeiten in Betracht, vorzugsweise eine Lagerung auf zylindrischen Rollen oder die Anwendung von Vielkugellagern. Letztere bestehen im Wesentlichen aus zwei Tellern, zwischen denen sich eine Anzahl von Kugeln befindet, welche die äußere Belastung, z.B. eine Normalkraft, nach dem Prinzip einer Parallelschaltung übertragen. Durch die Materialauswahl sowie die Anpassung der Anzahl und Größe der Wälzkörper kann die Tragfähigkeit dieser Lagerelemente an die hohen zu übertragenden Kräfte, wie sie bei einer Turbinenanlage zu berücksichtigen sind angepasst werden. Bei der Lagerauslegung ist die lastenaufnehmende Kontaktfläche und deren Geometrie zu berücksichtigen, das heißt dass z.B. bei Kugeln eine Punktberührung anstelle einer Linienberührung bei zylindrischen Rollen vorliegt.

Bevorzugt weist ein Wälzkörper kugelförmige oder zylinderförmige Geometrie auf.

Bei der Gestaltung mit zylinderförmigen Rollen als Wälzkörper ergibt sich vorteilhafterweise für jede Rolle jeweils ein Linienkontakt, der sich für die Übertragung hoher Kräfte besser eignet als bei einer Kugel als Wälzkörper mit einer Punktberührung. Dabei ist als Auslegungskriterium für die Bemessung des Auflagers die relevante Beanspruchung durch Herz'sche Pressung, welche sich durch die Form der Kontaktpartner, z.B. Kugel bzw. Zylinder gegen Ebene, relevante Radien, Werkstoffe der Kontaktpartner (Elastizitätsmodul, Querkontraktionszahl) bestimmt. Aufgrund der hohen Kräfte, die eine Auflagerung aufnehmen muss, die bei einer großen massiven Turbinenanlage beispielsweise in der Größenordnung von größer 100 kN bis zu ca. 500 kN liegt, ergeben sich entsprechend große erforderliche Kontaktlängen und große Radien der Zylinder, um die Bauteilbeanspruchungen (z.B. Herz'sche Pressung) in zulässigen Grenzen zu halten.

Zur Erzielung ausreichend hoher Festigkeiten der Kontaktpartner können die Wälzkörper, z.B. die zylindrischen Rollen, auf separaten, aus einer hochfesten Legierung bestehenden Platten aufliegen, die ihrerseits mit den Auflagerpartnern (z.B. Innengehäuse sowie Lagergehäuse bzw. Fundament) verbunden sind. Die aus der hochfesten Legierung bestehenden Platten bilden dabei zugleich eine Kontaktfläche mit den Wälzkörpern, die bei einem Verschiebevorgang eine Normalkraft aufnimmt. Dabei können vorteilhafterweise in einer entsprechenden Ausgestaltung mehrere Rollen parallel geschaltet werden, um bei begrenzter Breite eine zusätzliche Kontaktlänge zu erzielen, um damit die Tragfähigkeit des Wälzlagers zu erhöhen. Dabei kann durch konstruktive Maßnahmen gewährleistet werden, dass sich eine im Wesentlichen gleiche und gleichmäßige Belastung der Rollen auch unter einer möglicherweise auftretenden Verformung der Gehäuse der Turbinenanlage einstellt.

Vorzugsweise weist eine bei einem Verschiebevorgang eine Normalkraft aufnehmende Kontaktfläche des Wälzkörpers zumindest lokal eine zylindermantelförmige Geometrie mit einem Krümmungsradius auf. Der Krümmungsradius ist hierbei je nach zu erwartender Lagerbelastung vorgebbar. Zur Aufnahme einer Normalkraft genügt mithin eine zylindermantelförmige Geometrie der Kontaktfläche. Im Hinblick auf eine möglichst effiziente Ausnutzung des begrenzten Bauraums im Lagerbereich können vorteilhafterweise anstelle vollständig ausgeführter zylindrischer Rollen auch Wälzkörper verwendet werden, die durch Weglassen von für eine Lastaufnahme unbenutzten seitliche Bereichen der Rollen eine engere Anordnung der Wälzkörper erlauben. Im Falle mehrerer parallel geschalteter Wälzkörper kann zur Fixierung der Wälzkörperabstände, d.h. der Abstände der Rotationsachsen der Wälzkörper, eine geeignete Fixiereinrichtung, z.B. ein Käfig, vorgesehen sein.

Vorzugsweise umfasst der Lagerbereich einen Tragarm des Innengehäuses sowie einen Auflagerbereich, wobei der Tragarm über die Lagereinrichtung auf den Auflagerbereich aufgelagert ist. Der Tragarm ist somit vorteilhafterweise ein Bestandteil des Innengehäuses und mit diesem fest verbunden. Das Innengehäuse ist daher über den Tragarm auf den Auflagerbereich aufgelagert, wobei mit der Lagereinrichtung eine leichte axiale Verschiebbarkeit des Innengehäuses erzielbar ist.

Als besonders vorteilhafte Ausgestaltung erweist sich hierbei eine Ankopplung des Axialkraft übertragenden Schubelements an den Tragarm. Die axiale Verschiebekraft kann somit von dem Schubelement, z.B. einer Schubstange, unmittelbar auf den Tragarm und somit auf das Innengehäuse übertragen werden. Dabei ist die Lagereinrichtung beispielsweise zwischen dem Tragarm und dem Auflagerbereich angeordnet, wobei die Lagereinrichtung im Hinblick auf einen möglichst geringen Haftreibungskoeffizienten ausgelegt ist, so dass ein bei einem Verschieben des Innengehäuses bei der Überwindung der Haftreibung spontan auftretender axialer Versatz kleiner ist als ein vorgegebener Maximalwert, insbesondere kleiner als 2 mm.

In einer weiter bevorzugten Ausgestaltung weist die Lagereinrichtung einen Hebel auf, über den der Tragarm mit dem Auflagerbereich drehgelenkig verbunden ist. Hierzu weist beispielsweise sowohl der Tragarm als auch der Auflagerbereich einen jeweiligen Bolzen auf, der den Hebel drehgelenkig aufnimmt, wobei die Länge des Hebelarms durch den Abstand der Bolzen festgelegt ist. Durch Anpassung von Bolzendurchmesser und Hebellänge kann ein gegenüber den herkömmlichen Lagerkonzepten mit einer reibungsbehafteten Gleitplatte, deutlich geringeres Reibmoment eingestellt werden. Durch die Realisierung der Lagereinrichtung mit einer einen Hebelmechanismus aufweisenden Pendelstütze kann somit in Kombination mit dem Axialkraft übertragenden Schubelement eine leichte axiale Verschiebbarkeit des Innengehäuses unter Einhaltung der zulässigen Materialbeanspruchung gewährleistet werden.

Vorteilhafterweise ist bei dieser Konstruktion keine permanente Versorgung mit einem Betriebsmittel erforderlich. Ebenso wenig bestehen lokale Stellen hoher Herz'scher Pressung bei der Hebelkonstruktion. Die auftretende Rückstellkraft bzw. Haltekraft bei einem axialen Verschieben des Innengehäuse kann durch entsprechende Auslegung des Hebelmechanismus im Hinblick auf die Hebelarmlänge und den Bolzendurchmesser unter einem vorgegebenen maximalen Wert gehalten werden, so dass sich allenfalls eine geringfügige tolerierbare Beeinflussung der Radialspiele ergibt. Die dadurch möglicherweise auf das Schubelement einwirkende Rückstellkraft bzw. Haltekraft kann vorteilhafterweise auf einen sehr geringen Wert reduziert werden, so dass unerwünschte Verformungen des Schubelements infolge elastischer Dehnung der Stauchung weitgehend ausgeschlossen werden können.

Vorzugsweise ist zur Dämpfung von Schwingungen das Innengehäuse mit einer Dämpfungseinrichtung verbunden. Die Dämpfungseinrichtung kann hierbei als hydraulische Dämpfungseinrichtung, die im Betrieb mit Hydrauliköl beaufschlagt ist, ausgestaltet sein oder aber als viskoses Reibungsdämpfungssystem. Das Innengehäuse ist beispielsweise über die Dämpfungseinrichtung mit dem Auflagerbereich verbunden, so dass mögliche Schwingungen, die von dem Fundament in den Auflagerbereich einkoppeln direkt auf das Innengehäuse übertragen werden können und direkt nicht oder nur in geringem Maße die Axialkraft übertragenden Schubelemente belasten. Somit ist vorteilhafterweise durch das Vorsehen der Dämpfungseinrichtung die Aufnahme kurzzeitiger transienter Kräfte, z.B. in Gebieten mit erhöhter Erdbebengefahr, möglich, wodurch eine hohe Betriebssicherheit auch in solchen Situationen erreicht ist. Der Betrieb der Lagereinrichtung ist in Kombination mit der Dämpfungseinrichtung somit auch im Falle einer erheblichen transienten Stoßbelastung gewährleistet, was insbesondere bei einer großen Turbinenanlage mit sehr schweren Gehäusen von großem Vorteil ist. In besonderer Weise wird durch diese Ausgestaltung das Schubelement vor einer tansienten Belastung geschützt und dieses kann seine Funktion ohne Einschränkung wahrnehmen.

In einer bevorzugten Ausgestaltung der Turbinenanlage sind eine Mitteldruckteil-Dampfturbine und zumindest zwei ein jeweiliges Innengehäuse aufweisende Niederdruckteil-Dampfturbinen vorgesehen. Dabei sind die Teilturbinen entlang der Hauptachse angeordnet, wobei die Innengehäuse mit dem Schubelement verbunden und in einem eine Lagereinrichtung aufweisenden Lagerbereich gelagert sind.

Vorzugsweise weist die Mitteldruckteil-Dampfturbine ein Außengehäuse auf, das über ein Schubelement mit dem Innengehäuse der in axialer Richtung nachgeordneten Niederdruckteil-Dampfturbine verbunden ist, und ein mit dem Außengehäuse verbundenes Fixlager bildet den axialen Festpunkt für eine thermische axiale Ausdehnung.

Vorzugsweise weist zumindest eine der Niederdruck-Teilturbinen ein Abdampfgehäuse mit einer Abströmfläche von 10,0 m² bis 25 m², insbesondere von 12,5 m² bis 16 m² auf.

Die Turbinenanlage ist in besonderer Weise als Ausgestaltung in Form einer Dampfturbinenanlage geeignet. Es können hierdurch insbesondere Dampfturbinenanlagen mit Niederdruckteil-Dampfturbinen sehr großer Abströmfläche realisiert werden, wie sie für zukünftige Dampfturbinenentwicklungen von Bedeutung sind. Die dabei zu realisierenden großen Innengehäuse der Teilturbinen sind mit dem Anlagenkonzept der Erfindung axialverschieblich lagerbar, wobei zur Verschiebung Axialkraft übertragende Schubelemente problemlos einsetzbar sind.

Die Erfindung ermöglicht mithin weiterhin den Einsatz der vorteilhaften Schubelemente, z.B. in Form von Schubstangen, zum Ausgleich der relativen Axialdehnungen zwischen Turbinenläufer und Innengehäuse der Turbinenanlage.

Die vorgeschlagenen Lösungen zur Ausgestaltung der Lagereinrichtung mit geringer Haftreibung haben den Vorteil, dass a-xialspielreduzierende Maßnahmen, die eine Verschiebung der Innengehäuse, insbesondere der Innengehäuse von Niederdruckteil-Dampfturbinen, bedingen, leichter realisierbar sind. Weiterhin ermöglicht das erfindungsgemäße Konzept auch die Ausführbarkeit vielgehäusiger Turbinenanlagen, z.B. mit vier Niederdruck-Teilturbinen, wodurch eine Vergrößerung des Einsatzbereiches vorhandener Turbinenbaureihen erreichbar ist.

Anhand der in der Zeichnung dargestellten Ausführungsbeispiele wird eine Turbinenanlage im Folgenden näher erläutert. Hierbei zeigen schematisch und nicht maßstäblich:
- FIG 1: einen Längsschnitt durch eine Dampfturbinenanlage,
- FIG 2: einen Längsschnitt durch einen Lagerbereich, in dem ein Innengehäuse axialverschieblich gelagert ist,
- FIG 3: eine Schnittansicht gemäß der Schnittlinie III-III aus FIG 2,
- FIG 4: eine Schnittansicht einer Ausgestaltung der Lagereinrichtung als hydrostatisches Lager,
- FIG 5: eine alternative Ausgestaltung des in FIG 4 gezeigten hydrostatischen Lagers,
- FIG 6 bis 8: jeweils alternative Ausgestaltungen der Lagereinrichtung mit einem Wälzlager, und
- FIG 9: eine einen Hebelmechanismus aufweisende Lagereinrichtung.

Gleiche Bezugszeichen haben in den Figuren die gleiche Bedeutung.

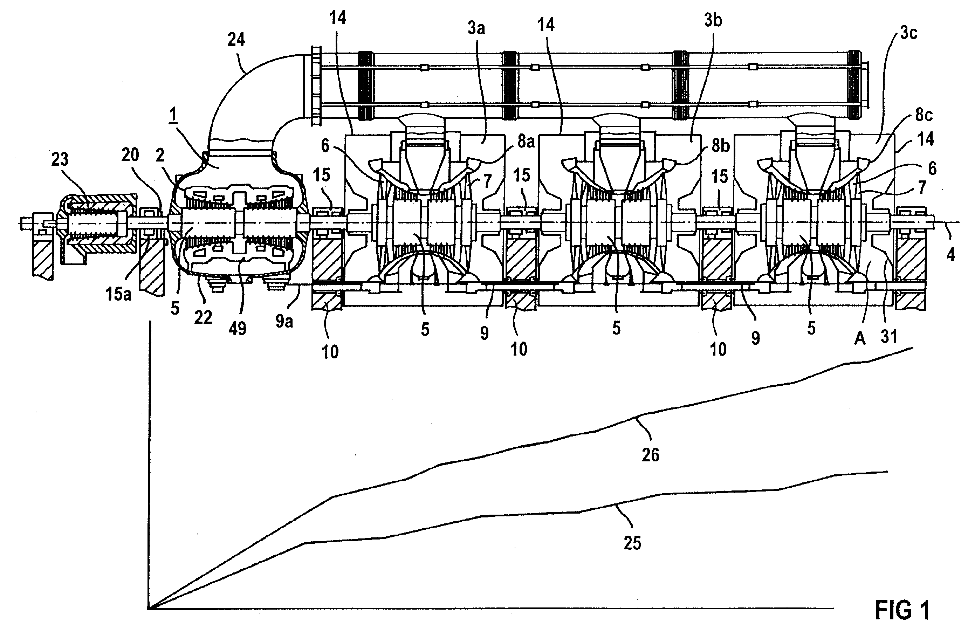

In FIG 1 ist eine Dampfturbinenanlage 1 mit hintereinander entlang einer Hauptachse 4 angeordneter Hochdruckteil-Dampfturbine 23, Mitteldruckteil-Dampfturbine 2 und drei im Wesentlichen baugleicher Niederdruckteil-Dampfturbinen 3a,3b,3c dargestellt. Die Niederdruckteil-Dampfturbinen 3a,3b,3c sind strömungstechnisch durch eine Dampfzuführung 24 mit der Mitteldruckteil-Dampfturbine 2 verbunden. Die Mitteldruckteil-Dampfturbine 2 weist ein Außengehäuse 22 auf. Jede der Niederdruckteil-Dampfturbinen 3a,3b,3c weist ein jeweiliges Innengehäuse 8a,8b,8c und ein das Innengehäuse 8a,8b,8c umgebendes Außengehäuse 14 auf. Jedes Innengehäuse 8a,8b,8c trägt die Leitschaufeln 6 für eine Niederdruck-Dampfbeaufschlagung. Desweiteren weisen die Niederdruckteil-Dampfturbinen 3a,3b,3c zur Dampfabströmung jeweils ein Abdampfgehäuse 31 mit einer großen Abströmfläche A auf, wobei die Abströmfläche 10,0 m² bis zu 25 m² beträgt. In jedem Innengehäuse 8a,8b,8c ist ein jeweiliger sich entlang der Hauptachse 4 erstreckender Turbinenläufer 5 angeordnet, der die Niederdruck-Laufschaufeln 7 trägt. Die Mitteldruckteil-Dampfturbine 2 weist ein Innengehäuse 49 auf. Zwischen der Mitteldruckteil-Dampfturbine 2 und der ersten Niederdruckteil-Dampfturbine 3a und zwischen den jeweils benachbarten entlang der Hauptachse 4 aufeinander folgenden Niederdruckteil-Dampfturbinen 3a,3b,3c ist jeweils ein Lagerbereich 10 vorgesehen. In dem Lagerbereich 10 ist jeweils ein Lager 15 angeordnet. Dieses Lager 15 dient sowohl der Lagerung der Turbinenläufer 5, d.h. als Wellenlager, als auch der Lagerung der jeweiligen Innengehäuse 8a,8b,8c. Zwischen der Hochdruckteil-Dampfturbine 23 und der Mitteldruckteil-Dampfturbine 2 ist ebenfalls ein Lager 15a zur Lagerung der Turbinenläufer dieser Teilturbinen 2,23 vorgesehen. Im Bereich der Auflagerung der Innengehäuse 8a,8b,8c der jeweiligen Lager 15 ist jeweils parallel zur Hauptachse 4 ein Axialkraft übertragendes Schubelement 9 geführt. Das Schubelement kann beispielsweise als Kupplungsstange 9a ausgestaltet sein. Eine jeweilige Kupplungsstange 9a verbindet die Mitteldruckteil-Dampfturbine 2 mit der ersten Niederdruckteil-Dampfturbine 3a und die einander benachbarten Innengehäuse 8a,8b,8c der Niederdruckteil-Dampfturbinen 3a,3b,3c untereinander. Das Außengehäuse 22, die Innengehäuse 8a,8b,8c sowie die diese verbindenden Schubelemente 9,9a bilden einen Dehnungsverbund, welcher sich bei einer Beaufschlagung mit heißem Dampf axial in Richtung der Hauptachse 4 ausdehnt. Dieser so gebildete Dehnungsverbund hat einen axialen Festpunkt 20, der an dem Fixlager 15a zwischen Hochdruckteil-Dampfturbine 23 und Mitteldruckteil-Dampfturbine 2 liegt. Die Größe der thermischen Ausdehnung gerechnet von diesem Festpunkt 20 entlang der Hauptachse 4 ist durch die Dehnungslinie 25 im unteren Teil der FIG 1 dargestellt. Eine entsprechende Dehnungslinie 26 der starr miteinander verbundenen Turbinenläufer 5 der Mitteldruckteil-Dampfturbine 2 und der Niederdruckteil-Dampfturbinen 3a,3b,3c ist ebenfalls dargestellt. Durch eine Verbindung der Niederdruckteil-Dampfturbinen 3a,3b,3c zu einem Dehnungsverbund in Kombination mit dem Außengehäuse 22 der Mitteldruckteil-Dampfturbine 2 werden die einzelnen Wärmedehnungen genutzt, um die Innengehäuse 8a,8b,8c in Richtung eines nicht näher dargestellten Generators entlang der Hauptachse 4 axial zu verschieben. Entlang der Hauptachse 4 werden somit sämtliche Wärmedehnungen der Innengehäuse 8a,8b,8c aufsummiert, wodurch die Relativdehnung zu den starr miteinander verbundenen Turbinenläufern 5 verringert wird. Ein Vergleich zwischen den Dehnungslinien 25 und 26 zeigt, dass über die gesamte Länge der Turbinenanlage 1 dennoch ein gewisser Dehnungsunterschied zwischen den Turbinenläufern 5 und dem Innengehäuse 8c der letzten Niederdruck-Teilturbine 3c verbleibt. Dieser Dehnungsunterschied bedingt ein unterschiedliches axiales Spiel zwischen den Leitschaufeln 6 sowie den Laufschaufeln 7 jeder Niederdruckteil-Dampfturbine 3a,3b,3c.

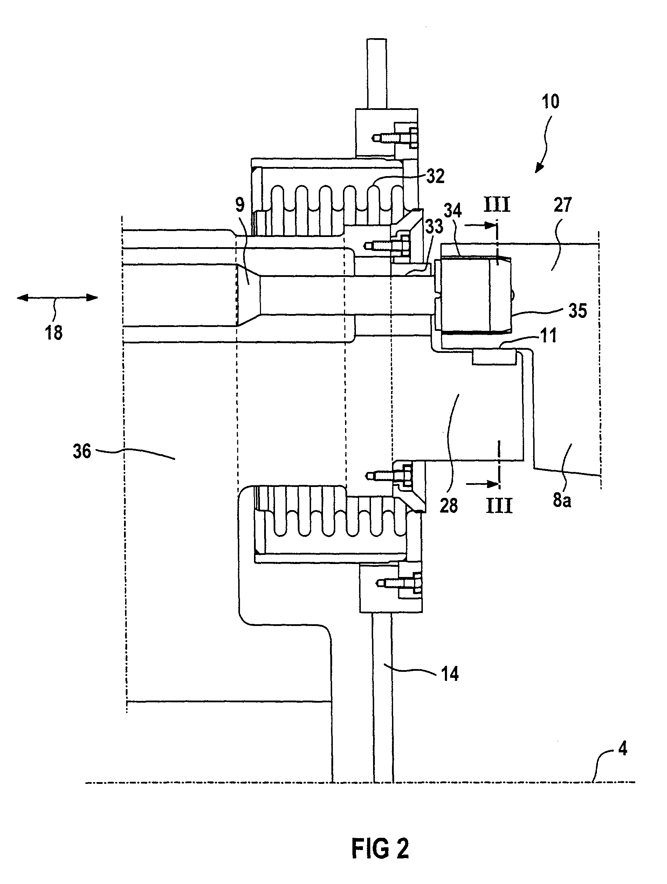

In FIG 2 ist ein Schnitt durch einen Lagerbereich 10 der in der FIG 1 dargestellten Dampfturbinenanlage 1 gezeigt. Der Lagerbereich weist ein Lagergehäuse 36 sowie entlang der Hauptachse 4 axial dem Lagerbereich 36 nachgeordnet ein Innengehäuse 8a auf. Das Lagergehäuse 36 weist einen Auflagerbereich 28 auf sowie eine Durchführung 33 zur vakuumdichten Durchführung des Schubelements 9. An dem Innengehäuse 8a ist ein Tragarm 27 gebildet, der eine Aufnahme 34 für das Schubelement 9 umfasst. Entlang einer axialen Verschieberichtung 18 ist das Innengehäuse 8a über das Schubelement 9 verschieblich, wobei das Schubelement 9 eine Axialkraft im Wesentlichen parallel zu der Hauptachse 4 über den Tragarm 27 auf das Innengehäuse 8a überträgt. Hierzu weist die Aufnahme 34 eine Aufnahmefläche 35 auf, die als Reaktionsfläche zur Aufnahme der durch das Schubelement 9 vermittelten Axialkraft dient. Die Aufnahme 34 mit der Aufnahmefläche 35 wird auch als Gewindegrundloch bezeichnet. Zur Erreichung einer leichten axialen Verschiebbarkeit des Innengehäuses 8a weist der Lagerbereich 10 eine Lagereinrichtung 11 auf. Die Lagereinrichtung 11 ist hierbei zwischen dem Tragarm 27 und dem Auflagerbereich 28 angeordnet. Somit ist der Tragarm 27 über die Lagereinrichtung 11 auf dem Auflagerbereich 28 aufgelagert. Die Lagereinrichtung 11 ist derart ausgestaltet, dass diese eine so geringe Haftreibung aufweist, dass ein bei einem Verschieben des Innengehäuses 8a bei der Überwindung der Haftreibung spontan auftretender axialer Versatz kleiner ist als 2 mm. Die Lagereinrichtung 11 ist hierzu beispielsweise haftreibungsfrei ausgestaltet, wodurch die zulässige Obergrenze eines axialen Versatzes von 2 mm sicherlich unterschritten wird. Dadurch wird erreicht, dass ein spontanes Losbrechen bei einem axialen Verschiebevorgang weitgehend vermieden wird. Weiterhin entfällt weitgehend die bisher bei den herkömmlichen Lagerkonzepten aufgetretene nennenswerte Verformung der Schubstange 9, die vor der Überwindung der Haftreibung zu verzeichnen war. Zur vakuumdichten Führung des Schubelementes 9 ist an dem Außengehäuse 14 ein Kompensator 32, z.B. in Form eines Dehnungsbalgs, angeordnet. Der Kompensator 32 wirkt hierbei gleichzeitig als Membrandichtung, die den durch das Innengehäuse 8a und das Außengehäuse 14 gebildeten Vakuumraum abdichtet und zugleich ein axiales Verschieben entlang der Verschieberichtung 18 ermöglicht.

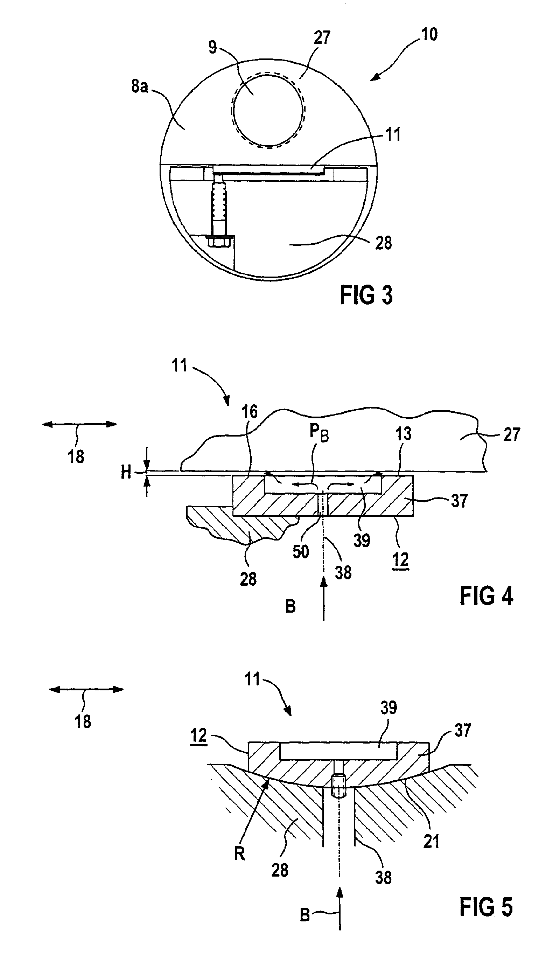

Die in FIG 3 gezeigte Schnittansicht III-III der FIG 2 illustriert im Detail die Auflagerung des Tragarms 27 auf den Auflagerbereich 28 über die Lagereinrichtung 11.

Die Lagereinrichtung 11 kann im Hinblick auf die Einstellung einer möglichst geringen Haftreibung zur Vermeidung eines spontan auftretenden axialen Versatzes auf unterschiedliche Weise ausgestaltet sein. Eine besonders bevorzugte Möglichkeit ist in FIG 4 dargestellt, wobei die Lagereinrichtung 11 ein hydrostatisches Lager 12 aufweist. Das hydrostatische Lager 12 ist zwischen dem Tragarm 27 und dem Auflagerbereich 28 angeordnet. Hierzu weist das Lager 12 einen hydrostatischen Gleitschuh 37 mit einer Zufuhr 38 für ein Betriebsmittel B, beispielsweise Drucköl, auf. Im Betrieb des hydrostatischen Gleitlagers 12 ist dieses mit dem Betriebsmittel B beaufschlagt. Der Gleitschuh 37 weist hierzu eine Zufuhröffnung 50 auf, die in einen dem Tragarm 27 zugewandten Druckraum 39 einmündet. Der Gleitschuh 37 ist mit dem Auflagerbereich 28 verbunden, wobei vorteilhafterweise das Betriebsmittel B über den Auflagerbereich 28 dem hydrostatischen Lager 12 zuführbar ist. Im Betrieb des Lagers 12 ist in dem Druckraum 39 Betriebsmittel B unter einem Druck p_{B} vorgesehen. Infolge der Druckkraft wird der Tragarm 27 gegenüber dem Gleitschuh 37 vertikal angehoben, wobei ein Spalt 16 gebildet ist. Der Spalt 16 weist eine radiale Höhe H auf und erstreckt sich zwischen dem Gleitschuh 37 und dem Tragarm 27 entlang der axialen Verschieberichtung 18. Die Höhe H des Spalts 16 ist hierbei in Abhängigkeit von dem Druck p_{B} respektive dem Volumenstrom des Betriebsmittels im Druckraum 39 einstellbar. Die Beaufschlagung des Druckraums 39 mit dem Betriebsmittel B hat die Ausbildung eines Gleitfilms 13 in dem Spalt 16 zur Folge, der durch kontinuierliche Zufuhr von Betriebsmittel B aufrechterhalten wird. Durch den Gleitfilm 13 im Spalt 16 ist eine besonders leichte axiale Verschiebung des Tragarms 27 bei Einwirkung einer Axialkraft entlang der Verschieberichtung 18 erreicht. Von besonderer Bedeutung ist, dass die Ausgestaltung der Lagereinrichtung 11 mit dem hydrostatischen Gleitlager 12 praktisch haftreibungsfrei ist.

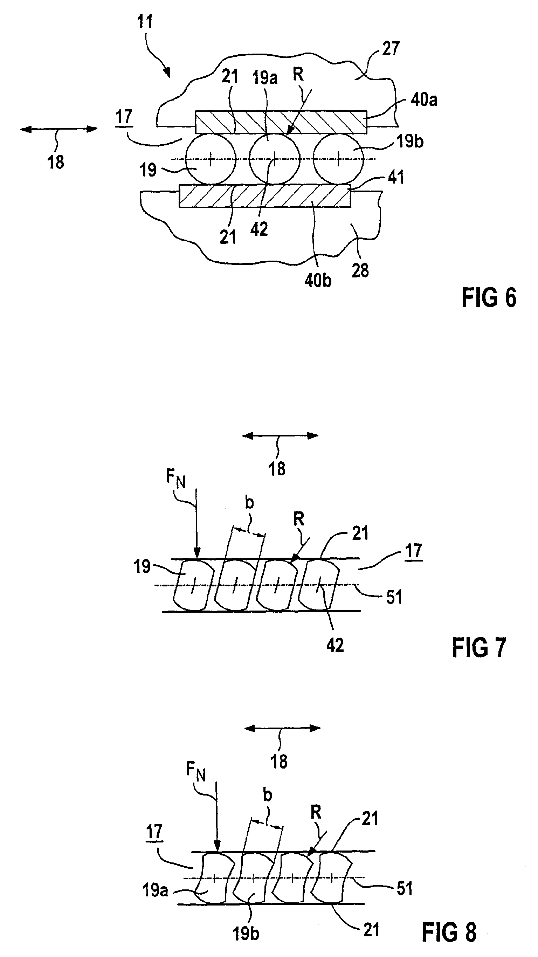

Eine alternative Ausgestaltung des in FIG 4 gezeigten hydrostatischen Gleitlagers 12 ist in FIG 5 gezeigt. Hierbei weist der Gleitschuh 37 auf der dem Auflagerbereich 28 zugewandten Seite eine gekrümmte Kontaktfläche 21 auf, wobei ein Krümmungsradius R eingestellt ist. Der Auflagerbereich 28 ist in gleicher Weise mit dem selben Krümmungsradius R versehen. Der Gleitschuh 37 liegt mit der Kontaktfläche 21 auf dem Auflagerbereich 28 fest auf. Die Kontaktfläche 21 kann hierbei die Geometrie einer Kugelkappe oder eines Zylindermantelausschnitts aufweisen. Für einen sicheren Betrieb kann die Kontaktfläche 21 mit einem nicht näher dargestellten Schmiermittel beaufschlagt sein, so dass der Gleitschuh und der Auflagerbereich 28 entlang der Kontaktfläche 21 relativ zueinander beweglich sind. Hierdurch ist ein Ausgleich einer geringfügigen Schrägstellung oder Verkippung des Gleitschuhs 37 gegenüber dem Auflagerbereich 28 möglich. Durch die Beweglichkeit des Gleitschuhs 27 ist eine sehr präzise Einstellung der Höhe H des Spalts 16 beim Betrieb des Gleitlagers 12 gewährleistet.

FIG 6 zeigt eine Lagereinrichtung 11 die ein Wälzlager 17 aufweist. Das Wälzlager 17 ist zwischen dem Tragarm 27 und dem Auflagerbereich 28 angeordnet. Ein plattenförmiges Kontaktelement 40a ist in den Tragarm 27 eingelassen. Ein weiteres Kontaktelement 40b ist im Auflagerbereich 28 vorgesehen. Die Kontaktelemente 40a,40b weisen jeweils eine Kontaktfläche 21 auf und bestehen aus einem Material 41 hoher Festigkeit. Zwischen den Kontaktelementen 40a,40b sind Wälzkörper 19,19a,19b parallel zu der axialen Verschieberichtung 18 hintereinander und beabstandet zueinander angeordnet. Die Wälzkörper 19,19a,19b weisen jeweils eine Drehachse 42 auf, um die die Wälzkörper 19,19a,19b jeweils drehbar sind. Bei einer Verschiebung des Tragarms 27 entlang der Verschieberichtung 18 werden die Wälzkörper 19,19a,19b durch die axiale Relativbewegung zwischen dem Tragarm 17 und dem Auflagerbereich 28 in eine rollende Bewegung versetzt. Aufgrund der kugelförmigen oder zylinderförmigen Geometrie der Wälzkörper 19,19a,19b ist dabei lediglich eine Rollreibung zu verzeichnen. Dagegen tritt bei dieser Lagerkonfiguration praktisch keine Haftreibung auf, weil ein Punktkontakt oder ein Linienkontakt zwischen den Wälzkörpern 19,19a,19b und den Kontaktflächen 40a,40b vorliegt. Somit wird erreicht, dass die ein Wälzlager 17 aufweisende Lagereinrichtung 11 mit einer so geringen Haftreibung ausgestattet ist, dass ein bei einem Verschieben des Tragarms 27, bei der Überwindung der Haftreibung spontan auftretender axialer Versatz kleiner ist als ein vorgegebenes Höchstmaß, beispielsweise kleiner als 2 mm.

Bei einer Gestaltung mit zylindrischen Rollen als Wälzkörper 19,19a,19b ergibt sich vorteilhaft ein Linienkontakt, der sich für die Übertragung sehr hoher Kräfte in besonderer Weise eignet. Aufgrund der hohen Kräfte, die das Wälzlager 17 aufnehmen muss, beispielsweise in der Größenordnung größer 100 kN bis 500 kN, ergeben sich entsprechend große erforderliche Kontaktlängen zwischen den Wälzkörpern 19,19a,19b und der Kontaktfläche 21. Durch die Form der Kontaktpartner, beispielsweise Kugel bzw. Zylinder als Wälzkörper 19,19a,19b gegen die ebene Kontaktfläche 21, die Krümmungsradien R der Wälzkörper 19,19a,19b sowie die Werkstoffe der Kontaktpartner (Elastizitätsmodul, Querkontraktionszahl), kann das Wälzlager 17 auf die auftretende Beanspruchung ausgelegt werden. Für die die Kontaktfläche 21 bildenden Kontaktelemente 40a,40b empfiehlt sich die Verwendung einer hochfesten Legierung als Material 41.

In den Figuren 7 und 8 sind jeweils alternative Ausgestaltungen von Wälzkörpern 19,19a,19b für das Wälzlager 17 dargestellt. Die Wälzkörper 19,19a,19b weisen zylindermantelförmige Geometrie auf, wobei die bei einem Verschiebevorgang eine Normalkraft F_{N} aufnehmende Kontaktfläche 21 des Wälzkörpers 19,19a,19b einen Krümmungsradius R hat. Die Wälzkörper 19,19a,19b der Figuren 7 und 8 sind allerdings gegenüber eines vollständig als zylindrische Rolle ausgeführten Wälzkörpers 19 (vgl. FIG 6) mit einer geringeren Axialerstreckung b ausgestaltet. Die für ein Abrollen bei einem axialen Verschiebevorgang unbenutzten seitlichen Bereiche der Wälzkörper 19,19a,19b wurden gezielt weggelassen. Die Wälzkörper 19,19a,19b weisen bezogen auf eine Mittelebene 51 symmetrische Gestalt auf. Durch die Realisierung der Wälzkörper 19,19a,19b mit einer reduzierten Axialerstreckung b ist eine engere Anordnung der Wälzkörper 19,19a,19b entlang der Verschieberichtung 18 erreicht. Dadurch können gegenüber in der FIG 6 gezeigten Konfiguration mehr Wälzkörper 19,19a,19b pro Längeneinheit in dem Wälzlager 17 angeordnet werden, was zu einer entsprechend erhöhten Belastbarkeit des Wälzlagers 17 führt.

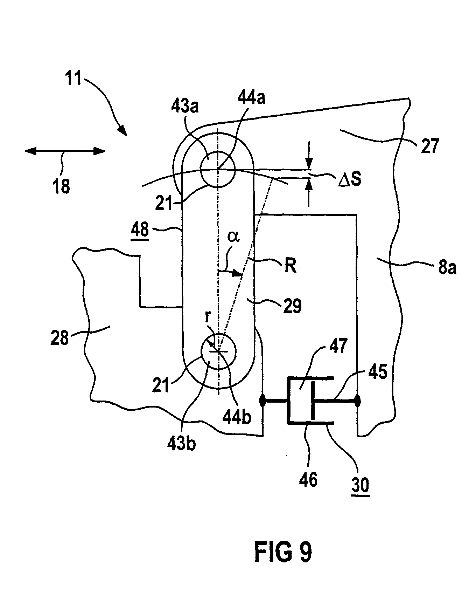

FIG 9 zeigt ein Ausführungsbeispiel der Lagereinrichtung 11, bei der die Lagereinrichtung 11 einen Hebel 29 aufweist, über den der Tragarm 27 mit dem Auflagerbereich 28 drehgelenkig verbunden ist. Dazu weist der Tragarm 27 einen Bolzen 43a und der Auflagerbereich 28 einen Bolzen 43b auf. Die Bolzen 43a,43b nehmen den Hebel 29 drehgelenkig auf, wozu die Bolzen 43a,43b und der Hebel 29 entlang einer im Wesentlichen zylindermantelförmigen Kontaktfläche 21 in Kontakt stehen und eine jeweilige Drehachse 44a,44b gebildet ist. Die Kontaktfläche 21 wird hierbei durch die Bolzen 43a,43b gebildet, wobei ein Bolzenradius r vorgesehen ist. Der Hebel 29 weist eine Hebellänge R auf, die zugleich einem Krümmungsradius R bezogen auf die dem Bolzen 43b zugeordnete Drehachse 44b entspricht. Der Tragarm 27 des Innengehäuses 8a ist über die den Hebel 29 aufweisende Lagereinrichtung 11 auf den Auflagerbereich 28 aufgelagert. Bei einer axialen Verschiebung entlang der Verschieberichtung 18 wird der Hebel 29 um einen Drehwinkel α bezogen auf eine vertikale Richtung gedreht. Durch die drehgelenkige Verbindung ist eine axiale Verschiebung daher mit einem Vertikalhub ΔS verbunden, um den das Innengehäuse 8a gegenüber dem Auflagerbereich 28 auch in einer radialen Richtung verschoben wird. Der Vertikalhub ΔS kann je nach Länge R des Hebels 29 auf ein vorgebbares geringes Maß begrenzt werden. Durch die Auflagerung des Tragarms 27 über den Hebel 29 auf dem Auflagerbereich 28 ist ein Pendelstützenlager 48 realisiert, das eine leichte axiale Verschiebbarkeit des Innengehäuses 8a unter Einsatz eines in der FIG 9 nicht näher dargestellten Schubelements 9 ermöglicht, wobei eine große Masse des Innengehäuses 8a verschieblich aufgelagert werden kann.

Zur zusätzlichen Erhöhung der Betriebssicherheit ist zur Dämpfung von Schwingungen das Innengehäuse 8a mit einer Dämpfungseinrichtung 30 verbunden. Die Dämpfungseinrichtung 30 ist als hydraulische Dämpfungseinrichtung auf gestaltet und weist hierzu einen Stempel 45 sowie einen den Stempel 45 umfassenden hydraulischen Zylinder 46 auf. Zum Betrieb der Dämpfungseinrichtung 30 ist diese mit einer Dämpfungsflüssigkeit 47, z.B. Hydrauliköl, beaufschlagt. Durch die Kombination der Lagereinrichtung 11 mit einer Dämpfungseinrichtung 30 ist vorteilhafterweise eine hohe Betriebssicherheit gewährleistet, insbesondere ist die Dämpfungseinrichtung 30 für die Aufnahme kurzzeitiger transienter Kräfte, beispielsweise bei einer Stoßbelastung infolge von Erdbeben, ausgelegt. Die Dämpfungseinrichtung 30 bewirkt eine direkte Übertragung möglicher Schwingungen von dem Auflagerbereich 28, der beispielsweise mit einem nicht näher dargestellten Fundament verbunden ist, Die Dämpfungseinrichtung vermeidet dadurch eine durch Schwingungen verursachte Krafteinleitung in die Schubelemente und erlaubt es, etwaige starke Schwingungsereignisse (z.B. Erdbeben) von den Schubelementen weitestgehend fernzuhalten auf das Innengehäuse 8a. Zu diesem Zweck ist die Dämpfungseinrichtung 30 sowohl mit dem Innengehäuse 8a als auch mit dem Auflagerbereich 28 unmittelbar oder mittelbar verbunden.

Mit der Erfindung wird eine besonders vorteilhafte Ausgestaltung für eine leichte axiale Verschiebbarkeit eines Innengehäuses einer Turbinenanlage bereitgestellt. Eine Anwendung bei großen massiven mehrgehäusigen Turbinenanlagen, z.B. Dampfturbinenanlagen mit Abdampfgehäusen großer Abströmflächen von 10,0 m² bis zu 25 m², ist unter Beibehaltung des Konzepts eines Axialkraft übertragenden Schubelements zur axialen Verschiebung möglich. Gleichzeitig kann die Axialspiel beeinflussende Verformung der Schubelemente deutlich reduziert oder gänzlich beseitigt werden. Neben einer Entlastung der Konstruktion mit einem Schubelement sind weitere Axialspiel reduzierende Maßnahmen, z.B. Hebelübersetzung der Dehnungen, möglich. Gegenüber den bisher bekannten Lagerkonzepten mit einer reibungsbehafteten Gleitplatte (Gleitpassung) ist mit der Erfindung ein deutlich verbessertes Lagersystem für eine Turbinenanlage erreicht, wobei sehr schwere Gehäuse axialverschieblich mit einem Schubelement verschieblich realisierbar sind. Die Turbinenanlage der Erfindung mit der Lagereinrichtung geringer Haftreibung ermöglicht hierbei die Kombination unterschiedlicher Lagerausgestaltungen mit einem schubübertragenden Schubelement, z.B. einer Schubstange.

## Patentansprüche

1. Turbinenanlage (1), insbesondere Dampfturbinenanlage, mit mindestens zwei Teilturbinen (2,3a,3b,3c), wobei jede der Teilturbinen (2,3a,3b,3c) einen sich entlang einer Hauptachse (4) erstreckenden Turbinenläufer (5) aufweist, welche Turbinenläufer starr miteinander verbunden sind, wobei zumindest eine der Teilturbinen (2,3a,3b,3c) ein den Turbinenläufer (5) umschließendes Innengehäuse (8a,8b,8c) aufweist, wobei das Innengehäuse (8a,8b,8c) in einem Lagerbereich (10) axialverschieblich gelagert ist, und wobei für eine axiale Verschiebung ein Axialkraft übertragendes Schubelement (9,9a) vorgesehen ist, das mit dem Innengehäuse (8a,8b,8c) verbunden ist,
**dadurch gekennzeichnet, dass** der Lagerbereich (10) eine Lagereinrichtung (11) mit einer so geringen Haftreibung aufweist, daß ein bei einem Verschieben des Innengehäuses (8a,8b,8c) bei der Überwindung der Haftreibung spontan auftretender axialer Versatz kleiner ist als 2 mm.

2. Turbinenanlage (1) nach Anspruch 1,
**dadurch gekennzeichnet, dass** die Lagereinrichtung (11) haftreibungsfrei ausgestaltet ist.

3. Turbinenanlage (1) nach Anspruch 1 oder 2,
**dadurch gekennzeichnet, dass** die Lagereinrichtung (11) ein hydrostatisches Lager (12) aufweist, welches mit einem druckbeaufschlagten Betriebsmittel (B), insbesondere Drucköl, versorgt ist, wobei ein Gleitfilm (13) gebildet ist.

4. Turbinenanlage (1) nach Anspruch 3,
**dadurch gekennzeichnet, dass** der Gleitfilm (13) in einem Spalt (16) vorgesehen ist, wobei die Höhe (H) des Spalts (16) in Abhängigkeit von dem Druck (p_{B}) des Betriebsmittels (B) einstellbar ist.

5. Turbinenanlage (1) nach einem der vorhergehenden Ansprüche,
**dadurch gekennzeichnet, dass** die Lagereinrichtung (11) ein Wälzlager (17) mit einer Anzahl von entlang der axialen Verschieberichtung (18) zueinander angeordneten Wälzkörpern (19,19a,19b) aufweist.

6. Turbinenanlage (1) nach Anspruch 5,
**dadurch gekennzeichnet, dass** eine bei einem Verschiebevorgang eine Normalkraft (F_{N}) aufnehmende Kontaktfläche (21) des Wälzkörpers (19,19a,19b) zylindermantelförmige Geometrie mit einem Krümmungsradius (R) hat.

7. Turbinenanlage (1) nach Anspruch 5,
**dadurch gekennzeichnet, dass** ein Wälzkörper (19,19a,19b) kugelförmige oder zylinderförmige Geometrie hat.

8. Turbinenanlage (1) nach einem der vorhergehenden Ansprüche,
**dadurch gekennzeichnet, dass** der Lagerbereich (10) einen Tragarm (27) des Innengehäuses (8a,8b,8c) sowie einen Auflagerbereich (28) umfasst, wobei der Tragarm (17) über die Lagereinrichtung (11) auf den Auflagerbereich (28) aufgelagert ist.

9. Turbinenanlage (1) nach nach Anspruch 8,
**dadurch gekennzeichnet, dass** die Lagereinrichtung (11) einen Hebel (29) aufweist, über den der Tragarm (27) mit dem Auflagerbereich (28) drehgelenkig verbunden ist.

10. Turbinenanlage (1) nach Anspruch 8 oder 9,
**dadurch gekennzeichnet, dass** zur Dämpfung von Schwingungen das Innengehäuse (8a,8b,8c) mit einer Dämpfungseinrichtung (30) verbunden ist.

11. Turbinenanlage (1) nach einem der vorhergehenden Ansprüche,
**dadurch gekennzeichnet, dass** eine Mitteldruckteil-Dampfturbine (2) und zumindest zwei ein jeweiliges Innengehäuse (8a,8b,8c) aufweisende Niederdruckteil-Dampfturbinen (3a,3b,3c) vorgesehen sind, wobei die Teilturbinen (2,3a,3b,3c) entlang der Hauptachse (4) angeordnet sind, wobei die Innengehäuse (8a,8b,8c) mit dem Schubelement (9,9a) verbunden und in einem eine Lagereinrichtung (11) aufweisenden Lagerbereich (10) gelagert sind.

12. Turbinenanlage Anspruch 11,
**dadurch gekennzeichnet, dass** die Mitteldruckteil-Dampfturbine (2) ein Außengehäuse (14) hat, das über ein Schubelement (9a) mit dem Innengehäuse (8a) der in axialer Richtung nachgeordneten Niederdruckteil-Dampfturbine (3a) verbunden ist, und ein mit dem Außengehäuse (14) verbundenes Fixlager (15a) den axialen Festpunkt (20) für eine thermische axiale Ausdehnung bildet.

13. Turbinenanlage nach Anspruch 11 oder 12,
**dadurch gekennzeichnet, daß** zumindest eine der Niederdruckteil-Dampfturbinen (3a,3b,3c) ein Abdampfgehäuse (31) mit einer Abströmfläche (A) von 10,0 m² bis 25 m², insbesondere 12,5 m² bis 16 m², aufweist.
